# EUROPÄISCHE PATENTSCHRIFT

(11) **EP 3 131 077 B1**
(45) Veröffentlichungstag und Bekanntmachung des Hinweises auf die Patenterteilung: **18.10.2017**
(21) Anmeldenummer: 15180932.4
(22) Anmeldetag: 13.08.2015
(51) Int. Cl.: G08B 29/24, G08B 17/103

(54) **OPTISCHE RAUCHDETEKTIONSEINHEIT FÜR EINEN RAUCHMELDER MIT ZWEI MITEINANDER OPTISCH GEKOPPELTEN LEUCHTDIODEN UND MIT EINER DAMIT VERBUNDENEN STEUEREINHEIT ZUR ABLEITUNG EINER ALTERUNGSINFORMATION SOWIE RAUCHMELDER**
OPTICAL SMOKE DETECTION UNIT FOR A SMOKE DETECTOR WITH TWO OPTICALLY COUPLED LIGHT EMITTING DIODES AND WITH A CONNECTED CONTROL UNIT FOR DERIVING AGING INFORMATION AND SMOKE DETECTOR
UNITÉ DE DÉTECTION DE FUMÉE OPTIQUE POUR UN DÉTECTEUR DE FUMÉE, DOTÉE DE DEUX DIODES ELECTROLUMINESCENTES COUPLÉES OPTIQUEMENT L'UNE À L'AUTRE ET D'UNE UNITÉ DE COMMANDE Y ÉTANT RACCORDÉE DESTINÉES À DÉVIER UNE INFORMATION RELATIVE AU VIEILLISSEMENT ET DÉTECTEUR DE FUMÉE

(43) Veröffentlichungstag der Anmeldung: 15.02.2017
(73) Patentinhaber: Siemens Schweiz AG, 8047 Zürich (CH)
(72) Erfinder: Allemann, Martin, 8620 Wetzikon (CH); Duric, Aleksandar, 6300 Zug (CH)
(74) Vertreter: Maier, Daniel Oliver

(56) Entgegenhaltungen:
- DE-A1-102013 204 962
- DE-U1-202015 000 820
- JP-A- 2011 203 010

## Beschreibung

Die Erfindung betrifft eine optische Rauchdetektionseinheit für einen Gefahrenmelder, insbesondere für einen Rauchmelder. Sie umfasst eine erste und zweite Leuchtdiode jeweils zum Aussenden von ein-, zwei- oder mehrfarbigem Licht. Weiterhin weist sie einen zumindest spektral auf ausgesandtes Licht empfindlichen Photoempfänger für die Rauchdetektion, wie z.B. eine Photodiode, sowie eine mit den Leuchtdioden und mit dem Photoempfänger verbundene Steuereinheit zur elektrischen Ansteuerung der Leuchtdioden sowie zur Bewertung eines vom Photoempfänger ausgegebenen Empfangssignals auf Brandkenngrössen hin auf. Eine solche Einheit ist beispielsweise aus der DE 20 2015 000 820 U1 bekannt. Die Steuereinheit ist typischerweise ein Mikrocontroller. Sie kann auch ein ASIC sein oder mit diskreten elektronischen Bauelementen realisiert sein. Die jeweiligen Verarbeitungsschritte für die zeitliche Ansteuerung der Leuchtdioden sowie die synchronisierte Erfassung und Auswertung des jeweiligen Empfangssignals können durch geeignete, auf dem Mikrocontroller ausführbare Programmschritte realisiert sein. Die Leuchtdioden, der Photoempfänger sowie der Mikrocontroller sind vorzugsweise auf einem Schaltungsträger angeordnet und untereinander verschaltet.

Derartige Rauchdetektionseinheiten sind allgemein bekannt. Sie können - wie auch bei der vorliegenden Erfindung - Teil eines Streulichtrauchmelders in geschlossener oder offener Bauweise sein. In geschlossener Bauweise weist ein solcher Streulichtrauchmelder eine für zu detektierenden Rauch durchlässige, jedoch gegen direktes Umgebungslicht abgeschirmte optische Messkammer auf. Eine derartige Messkammer wird oft auch als Labyrinth bezeichnet. Streulichtrauchmelder der offenen Bauart weisen dagegen einen ausserhalb des Meldergehäuses im Freien liegenden Detektionsraum auf. Schliesslich können derartige Rauchdetektionseinheiten Teil eines Extinktionsrauchmelders sein, bei dem die Lichtschwächung durch anwesenden Rauch durch den Photoempfänger detektiert und ausgewertet wird.

Bekannt ist auch, dass Leuchtdioden im Betrieb altern und im Laufe der Zeit eine verringerte Lichtleistung aufweisen. Im Gegensatz dazu zeigen Photosensoren, wie z.B. Photodioden, vergleichsweise kleine, vernachlässigbare Alterungserscheinungen. Es ist folglich die Lichtleistung zu überwachen, um im Fall einer zu geringen Lichtleistung für die Rauchdetektion eine Warnmeldung auszugeben. Alternativ kann die Ansteuerleistung oder die Pulsdauer für die Ansteuerung der Leuchtdiode erhöht werden, um die verringerte Lichtleistung bzw. den emittierten Lichtstrom zu korrigieren. Hierzu ist die Verwendung eines separaten Photosensors bekannt, der vorzugsweise direktes Licht von der Leuchtdiode empfängt und der Leuchtdiode gegenüberliegend angeordnet ist. Abhängig vom Photosensorsignal erfolgt dann die Ausgabe der Warnmeldung und/oder es erfolgt eine Lichtleistungskompensation über dem Weg der elektrischen Ansteuerung der Leuchtdiode.

Weiterhin ist bekannt, dass sämtliche optoelektronischen Bauelemente in der Rauchdetektionseinheit mit der Zeit verschmutzen. Das bedeutet, dass die optische Sendeleistung der Leuchtdiode und die optische Detektionsempfindlichkeit des Photoempfängers für die Rauchdetektion sowie des separaten Photosensors für die Lichtleistungs- bzw. Lichtstromüberwachung mit zunehmender Verschmutzung und unabhängig von der Alterung dieser optoelektronischen Bauelemente abnehmen.

Ferner sind ein-, zwei- oder mehrfarbige Leuchtdioden bekannt, die einstückige Baueinheiten sind. Sie weisen ein LED-Gehäuse, zumindest einen darin angeordneten LED-Chip für die jeweilige "Farbe" sowie den jeweiligen LED-Chip kontaktierende, aus dem LED-Gehäuse herausgeführte Anschlusskontakte auf.

Davon ausgehend ist es eine Aufgabe der Erfindung, eine optische Rauchdetektionseinheit anzugeben, die über die Stand-und Betriebszeit hinweg zuverlässiger arbeitet.

Die Aufgabe wird mit den Merkmalen des Hauptanspruchs gelöst. Vorteilhafte Ausführungsformen der vorliegenden Erfindung sind in den abhängigen Ansprüchen angegeben. In den abhängigen Ansprüchen 11, 12, 15 sind ein geschlossener Streulichtrauchmelder, ein Extinktionsrauchmelder sowie ein offener Streulichtrauchmelder angegeben, die jeweils eine erfindungsgemässe Rauchdetektionseinheit aufweisen.

Erfindungsgemäss sind die Leuchtdioden derart miteinander optisch gekoppelt, dass zumindest eine der Leuchtdioden die andere Leuchtdiode mit einem Teil des ausgesandten Lichts beleuchtet. Die Steuereinheit ist dazu eingerichtet, vorzugsweise abwechselnd eine der Leuchtdioden (zum Leuchten) anzusteuern sowie die andere Leuchtdiode in eine Betriebsart als Photodiode zu schalten und zugleich einen durch diese fliessenden Photostrom als Mass für den emittierten Lichtstrom der angesteuerten Leuchtdiode zu erfassen. Der Photostrom ist typischerweise proportional zur Beleuchtungsstärke und somit auch proportional zum emittierten Lichtstrom der Leuchtdiode. Zudem ist die Steuereinheit dazu eingerichtet bzw. programmiert, eine vom Grad der Abnahme des Photostroms abhängige Alterungsinformation der angesteuerten Leuchtdiode abzuleiten und auszugeben. Alternativ oder zusätzlich kann die Steuereinheit dazu eingerichtet sein, abhängig vom Grad der Abnahme des Photostroms die elektrische Ansteuerung der angesteuerten Leuchtdiode zu verändern, um eine entsprechende Abnahme des emittierten Lichtstroms zu korrigieren bzw. zu kompensieren.

Der Erfindung liegt die Erkenntnis zugrunde, dass jede Leuchtdiode auch als Photodiode verwendet bzw. betrieben werden kann, wenn auch mit einem erheblich schlechteren Wirkungsgrad im Vergleich zu Photodioden, die speziell zu Detektionszwecken entwickelt worden sind. Dennoch reicht das durch die andere Leuchtdiode empfangene Licht aus, um zumindest qualitativ den Lichtstrom der zum Leuchten angesteuerten Leuchtdiode zu bestimmen.

Der Grad der Abnahme des Photostroms kann durch Ermittlung der Differenz zwischen einem Nennstromwert für den Photostrom und einem aktuellen Ist-Stromwert des Photostroms erfolgen. Der Nennstromwert kann z.B. im Rahmen einer Typ- oder Serienprüfung der optischen Rauchdetektionseinheit ermittelt werden. Er kann auch ein Mittelwert von gemessenen Stromwerten am Anfang der Betriebszeit des Rauchmelders sein. Der so festgelegte Nennstromwert kann z.B. in einem Speicher der Steuereinheit, d.h. in einem nichtflüchtigen Speicher des Mikrocontrollers, hinterlegt werden. Die Steuereinheit kann dazu eingerichtet sein, wiederholt und insbesondere zyklisch einen aktuellen Ist-Stromwert des Photostroms zu erfassen und rechnerisch die Differenz aus dem hinterlegten Nennstromwert und dem aktuell erfassten Ist-Stromwert des Photostroms zu bilden. Diese Differenz aus den beiden Stromwerten entspricht dann dem Grad der Abnahme des Photostroms.

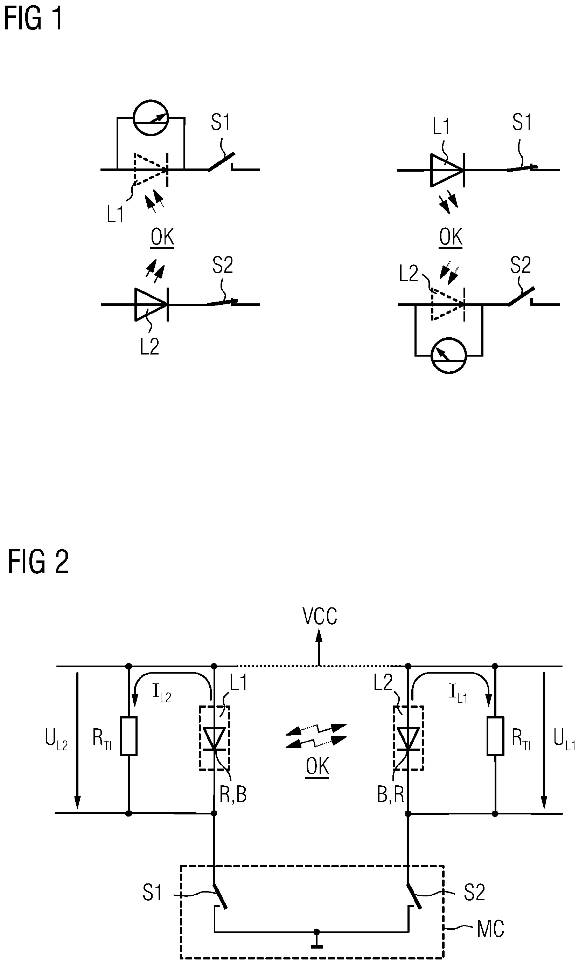

Anstelle des Photostroms kann auch eine von der Leuchtdiode erzeugte Photospannung erfasst werden. Hierzu wird parallel zur Leuchtdiode ein ohmscher Transimpedanzwiderstand geschaltet, der den durch die Leuchtdiode fliessenden Photostrom in eine dazu proportionale Photospannung umsetzt. Dabei wird die Leuchtdiode in ihrem Betrieb als Photodiode von dem Teil der dazu vorgesehenen Schaltungsanordnung (siehe FIG 2) freigeschaltet, der zur elektrischen Ansteuerung der Leuchtdiode zum Leuchten vorgesehen ist.

Die optische Kopplung ist vorzugsweise staubdicht ausgeführt, sodass keine verschmutzenden Partikel in den optischen Pfad zwischen den LED-Gehäusen der Leuchtdioden gelangen können.

Die Alterungsinformation kann z.B. ein mehrstufiger Alterungsgrad sein oder eine binäre Alterungsinformation sein wie z.B. "nicht gealtert" oder "gealtert". Der Alterungsgrad kann z.B. durch einen Zahlen- oder Prozentwert, wie z.B. von 0% bis 100%, repräsentiert sein. Zum Beispiel kann ein Prozentwert von 0 den Neuzustand und ein Prozentwert von 100 einen Zustand repräsentieren, bei dem eine sichere Rauchdetektion wegen zu geringem Streulicht nicht mehr zuverlässig möglich ist. Die Prozentwerte für den Neuzustand wie auch für den Zustand der nicht mehr sicheren Rauchdetektion können z.B. im Rahmen einer Typprüfung der Rauchdetektionseinheit bzw. des Rauchmelders messtechnisch ermittelt werden. Dazwischen liegende Prozentwerte können linear interpoliert sein. Bei einem vorgegebenen Wert, wie z.B. bei 50% oder 80%, ist dann eine entsprechende Warnmeldung ausgebbar, wie z.B. über einen angeschlossenen Melderbus des Rauchmelders, über Funk und/oder akustisch oder optisch am Rauchmelder selbst. Die Zuordnung zwischen erfasstem Photostrom des Photosensors zu dem beispielhaften Prozentbereich von 0% bis 100% kann mittels einer Zahlentabelle oder einer Kennlinie erfolgen, die zur späteren Alterungsbewertung durch den Mikrocontroller in einem elektronischen Speicher des Mikrocontrollers hinterlegt werden.

Die Steuereinheit kann dazu eingerichtet sein, den emittierten Lichtstrom der (zum Leuchten) angesteuerten Leuchtdiode mittels eines offenen oder geschlossenen Regelkreises an einen geforderten Nennlichtstrom für die Rauchdetektion nachzuführen. Der Lichtstrom kann z.B. durch eine Verlängerung der Pulslänge bei der elektrischen Ansteuerung der Leuchtdiode verändert werden, sodass auch die Lichtenergie pro Lichtpuls zunimmt. Alternativ oder zusätzlich kann auch der Ansteuerstrom und somit auch der Lichtstrom bzw. die Lichtleistung der Leuchtdiode erhöht werden. Im Sinne eines geschlossenen Regelkreises kann fortlaufend der aktuelle Lichtstrom ermittelt und durch Änderung in der elektrischen Ansteuerung der Leuchtdiode nachgeführt werden.

Durch die optische Kopplung der beiden Leuchtdioden miteinander ist vorteilhaft kein externer Photosensor mehr zur Überwachung des ausgesandten Lichtstroms erforderlich. Durch die optische Kopplung können sich vorteilhaft zwei Leuchtdioden gegenseitig auf eine unzulässig grosse Alterung, d.h. auf eine unzulässig grosse Abnahme des emittierten Lichtstroms bei sonst gleicher elektrischer Ansteuerung hin überwachen.

Ein weiterer besonderer Vorteil ist, dass wegen der staubdichten optischen Kopplung der beiden Leuchtdioden miteinander die messtechnische Erfassung des aktuellen Photostroms bzw. des daraus abgeleiteten aktuellen Lichtstroms der angesteuerten Leuchtdiode nicht nachteilig durch Verschmutzungen beeinträchtigt wird. Denn mit der Betriebszeit lagern sich im optischen Pfad der optischen Rauchdetektionseinheit Verschmutzungen wie Staub-, Rauch- oder Russpartikel ab. Mit dem optischen Pfad sind sämtliche Komponenten von der Lichterzeugung bis zur Lichtdetektion gemeint. Diese Komponenten, wie die Leuchtdioden, der Photoempfänger, der externe Photosensor beim Stand der Technik, sowie auch Blenden und optische Linsen, unterliegen der Verschmutzung. Dadurch nehmen der in das Streulichtzentrum emittierte Lichtstrom sowie die Detektionsempfindlichkeit des Photoempfängers mit der Zeit ab. Durch die direkte optische Kopplung zwischen den LED-Gehäusen zweier Leuchtdioden können jedoch keine Verschmutzungspartikel in den optischen Kopplungspfad gelangen.

Nach einer Ausführungsform weisen die Leuchtdioden jeweils ein LED-Gehäuse mit zumindest einem darin aufgenommenen LED-Chip zum Aussenden des ein-, zwei- oder mehrfarbigen Lichts sowie mehrere aus dem LED-Gehäuse herausgeführte Anschlusskontakte zur Kontaktierung mit dem jeweiligen LED-Chip auf. Die Steuereinheit ist dazu eingerichtet, wahlweise einen der LED-Chips einer der Leuchtdioden für die Rauchdetektion (zum Leuchten) anzusteuern und dazu eingerichtet, wahlweise einen der LED-Chips der anderen Leuchtdiode in eine Betriebsart als Photodiode zu schalten. Sie ist zudem dazu eingerichtet, zugleich einen durch den jeweiligen LED-Chip fliessenden Photostrom zu erfassen, um daraus eine Alterungsinformation des jeweils angesteuerten LED-Chips abzuleiten und auszugeben und/oder um daraus die elektrische Ansteuerung für den jeweils angesteuerten LED-Chips zu verändern.

Dabei ist die Photoempfindlichkeit eines LED-Chips für empfangenes Licht umso besser, je kurzwelliger dieses gegenüber der Wellenlänge des Lichts ist, welches der LED-Chip bei elektrischer Ansteuerung aussendet. Mit anderen Worten detektiert ein Infrarot-LED-Chip in der Betriebsart als Photodiode blaues Licht deutlich besser als ein blauer LED-Chip infrarotes Licht.

Durch die Verwendung zweier voneinander verschiedener "LED-Farben" ist zudem eine verbesserte Rauchdetektion durch eine Bestimmung der Teilchengrösse der Rauchteilchen und somit des Rauchtyps möglich. Die LED-Chips sind vorzugsweise als Flächenstrahler, d.h. als sogenannte Lambert-Strahler ausgebildet. Die "nackten" und für sich vollständig funktionsfähigen LED-Chips werden auch als "Die" bezeichnet. Sie weisen typischerweise eine quadratische oder auch rechteckige Form auf.

Nach einer bevorzugten Ausführungsform sind die beiden Leuchtdioden über einen Lichtleiter zur optischen Kopplung miteinander verbunden. Der Lichtleiter kann z.B. linien- oder plattenförmig ausgestaltet sein. Er kann aus einem transparenten Kunststoff oder aus Glas hergestellt sein. Durch die optische Kopplung können die beiden Leuchtdioden an verschiedenen Positionen und insbesondere an unterschiedlichen Streuwinkeln im Bezug auf den Photoempfänger in der Rauchdetektionseinheit angeordnet werden.

Alternativ kann zwischen den LED-Gehäusen zweier benachbart angeordneter Leuchtdioden ein transparenter Klebstoff, ein transparentes Silikon oder ein transparentes Wachs eingebracht werden. In diesem Fall übernehmen die zuvor eingebrachten optisch leitenden Stoffe die Funktion eines Lichtleiters. Im einfachsten Fall genügt ein Tropfen transparenter Kleber, der die LED-Gehäuse zweier benachbarter Leuchtdioden miteinander verklebt. Mit "benachbarter Anordnung" ist gemeint, dass die beiden Leuchtdioden mehr oder weniger die gleiche optische Achse aufweisen. Die beiden optischen Achsen der Leuchtdioden verlaufen dann parallel zueinander und in einem geringen Abstand im Bereich von wenigen Millimetern. Beide Leuchtdioden können auch einen in etwa gleichen Streulichtwinkel im Bezug zum Photoempfänger aufweisen. Sie können nebeneinander oder übereinander angeordnet sein.

Alternativ kann zwischen einem jeweiligen LED-Gehäuse und einem Endstück eines Lichtleiters, der zur optischen Kopplung zweier Leuchtdioden vorgesehen ist, ein transparenter Klebstoff, ein transparentes Silikon oder ein transparentes Wachs eingebracht werden. Dadurch ergibt sich ein durchgängiger optischer Pfad vom jeweiligen LED-Chip durch das LED-Gehäuse und dann über den optisch leitenden Stoff in das jeweilige Ende des Lichtleiters.

Vorzugsweise weist der transparente Klebstoff, das transparentes Silikon oder das transparente Wachs einen im Vergleich zum LED-Gehäuse annähernd gleichen optischen Brechungsindex auf.

Nach einer Ausführungsform weist die Leuchtdiode ein optisch klares LED-Gehäuse aus Kunststoff oder Glas auf. Wenn das LED-Gehäuse eine optische Aufnahme für den Lichtleiter aufweist, ist ein besonders einfacher Anschluss des Lichtleiters an das LED-Gehäuse möglich. Besonders vorteilhaft ist es, wenn im LED-Gehäuse ein Sackloch ausgespart oder eingebracht ist, welches im Durchmesser geringfügig grösser ist als der Aussendurchmesser des Lichtleiters. In diesem Fall kann das Endstück des Lichtleiters in das Sackloch eingesteckt und dort, wie z.B. mittels eines zuvor eingebrachten optischen Klebers, fixiert werden. Ist das Sackloch im LED-Gehäuse z.B. auf der Höhe einer seitlichen Kante eines LED-Chips angeordnet, so kann der sonst kaum verwertbare Lichtanteil besonders effektiv in den Lichtleiter einkoppeln.

Vorzugsweise ist ein jeweiliger LED-Chip zum Aussenden von monochromatischem infrarotem, rotem, orangenem, gelbem, grünem, blauem oder ultraviolettem Licht ausgebildet. Er kann alternativ zum Emittieren von weissem Licht ausgebildet sein, wenn auf einer blauleuchtenden oder auf einer ultraviolettleuchtenden LED-Chipfläche geeignete gelbleuchtende Leuchtstoffen aufgebracht werden.

Insbesondere ist zumindest eine der Leuchtdioden eine Zweifarben-Leuchtdiode mit zwei LED-Chips, wobei der erste LED-Chip zum Aussenden von Licht mit einer Wellenlänge im Bereich von 665 nm bis 1000 nm und der zweite LED-Chip zum Aussenden von Licht mit einer Wellenlänge im Bereich von 350 nm bis 500 nm ausgebildet ist. Insbesondere ist der erste LED-Chip zum Aussenden von Licht mit einer Wellenlänge von 940 nm ± 40 nm oder 860 nm ± 40 nm und der zweite LED-Chip zum Aussenden von Licht mit einer Wellenlänge von 460 nm ± 40 nm oder 390 nm ± 40 nm ausgebildet.

Einer weiteren Ausführungsform zufolge ist der für die Rauchdetektion vorgesehene Photosensor eine zumindest spektral auf ausgesandtes Licht von den beiden Leuchtdioden empfindliche, als Photodiode betriebene Leuchtdiode. Dadurch ist z.B. durch die Verwendung typgleicher Leuchtdioden eine besonders einfache, kostengünstige Rauchdetektionseinheit realisierbar.

Nach einer Ausführungsform weisen die Leuchtdioden ein Standardkunststoffgehäuse mit einem 3 mm- oder 5 mm-Durchmesser auf. Diese Standardgehäuse werden in einem Kunststoffgussverfahren hergestellt, bei dem ein LED-Chipträger mit dem darauf applizierten LED-Chip bzw. mit den darauf applizierten LED-Chips zusammen mit den Anschlusskontakten in das Kunststoffgehäuse mit eingegossen werden. Derartige 3 mm- oder 5 mm-Leuchtdioden werden bekanntermassen "off the shelf" als massenhaftes Consumerprodukt verkauft. Leuchtdioden mit einem solchen Standardgehäuse sind typischerweise für die Durchlochmontage vorgesehen. Die Leuchtdiode kann alternativ auch ein SMD-Bauelement für die Oberflächenmontage auf einem Schaltungsträger sein.

Die Aufgabe der Erfindung wird weiterhin mit einem Streulichtrauchmelder gelöst, der ein Meldergehäuse und eine darin aufgenommene optische Messkammer mit zumindest einer Öffnung für den möglichen Durchtritt von zu detektierendem Rauch aufweist. In der Messkammer ist eine gegenüber Umgebungslicht abgeschirmte erfindungsgemässe Rauchdetektionseinheit aufgenommen. Der Photoempfänger - typischerweise eine Silizium-PIN-Photodiode - ist mit beiden Leuchtdioden in einer Vorwärts- und/oder Rückwärtsstreulichtanordnung zur Detektion von Streulicht angeordnet. Die Steuereinheit ist dazu eingerichtet, einen Brandalarm auszugeben, falls das vom Photoempfänger ausgegebene Empfangssignal einen jeweiligen oder kombinierten Mindeststreulichtpegel überschreitet.

Bei einer Vorwärtsstreulichtanordnung liegt der Winkel zwischen Leuchtdiode und dem Photoempfänger in einem Bereich von 20° bis 90°, insbesondere in einem Bereich von 30° bis 70°. Bei einer Rückwärtsstreulichtanordnung liegt dieser Winkel in einem Bereich von mehr als 90° bis 160°, insbesondere in einem Bereich von 110° bis 150°.

Weiterhin wird die Aufgabe der Erfindung durch einen Extinktionsrauchmelder gelöst. Im Unterschied zum Streulichtrauchmelder ist hier der Photoempfänger den beiden Leuchtdioden zur Detektion von direktem Licht optisch gegenüberliegend angeordnet. Die Steuereinheit dazu eingerichtet, einen Brandalarm auszugeben, falls das vom Photoempfänger ausgegebene Empfangssignal einen Vergleichswert für eine maximal zulässige Lichtabschwächung unterschreitet. Mit "optisch gegenüberliegend" ist auch die Reflexion des von den Leuchtdioden ausgesandten Lichts über Spiegel und Retroreflektoren mit eingeschlossen.

Bei beiden zuvor beschriebenen Rauchmeldern weist die optische Messkammer einen Schaltungsträger zur Kontaktierung der beiden Leuchtdioden, des Photoempfängers und/oder der Steuereinheit auf. Der Schaltungsträger weist eine Abdeckung, insbesondere eine Kunststoffabdeckung, als Teil der optischen Messkammer auf. Vorzugsweise ist die Abdeckung aus einem schwarzen Kunststoff hergestellt. Sie weist vorzugsweise lichtabsorbierende Strukturen, wie z.B. geriffelte Flächen, auf. Es ist gemäss der Erfindung ein transparentes Kunststoffteil als Lichtleiter zur optischen Kopplung der beiden Leuchtdioden vorgesehen. Dieser Lichtleiter kann zwischen dem Schaltungsträger und der Kunststoffabdeckung angeordnet sein. Er kann z.B. in einer entsprechenden nutförmigen Aussparung in der Kunststoffabdeckung eingelegt werden. Alternativ kann der Lichtleiter mit an der Kunststoffabdeckung angespritzt werden, wie z.B. mittels eines sogenannten Zweikomponenten-Spritzgussverfahrens. Ferner weist die Kunststoffabdeckung Durchgangsöffnungen oder Aussparungen zu den Leuchtdioden auf, sodass diese über ihr jeweiliges LED-Gehäuse, über die jeweilige angrenzende Durchgangsöffnung und über den dort angrenzenden Lichtleiter optisch miteinander koppelbar sind.

Vorzugsweise sind auf der Kunststoffabdeckung LED-Aufnahmen für die Leuchtdioden angeordnet. Diese LED-Aufnahmen können auch integraler Teil der Kunststoffabdeckung selbst sein. Sie können z.B. halbschalenförmig ausgebildet sein. Dabei weisen die LED-Aufnahmen jeweils eine Durchgangsöffnung für ein Endstück des Lichtleiters auf. Mit anderen Worten koppelt eine dort aufgenommene Leuchtdiode direkt Licht in das am LED-Gehäuse anliegende Endstück des Lichtleiters ein.

Schliesslich wird die Aufgabe der Erfindung mit einem offenen Streulichtrauchmelder gelöst, der eine erfindungsgemässe optische Rauchdetektionseinheit aufweist. Letztere ist in einem Meldergehäuse des offenen Streulichtrauchmelders angeordnet. Dabei liegt ein für die Detektion von Streulicht vorgesehener Detektionsraum ausserhalb des Meldergehäuses. Mit anderen Worten befindet sich zwischen den Leuchtdioden und dem im Freien liegenden Detektionsraum einerseits und zwischen dem Photoempfänger und dem im Freien liegenden Detektionsraum andererseits keine weiteren Teile des Meldergehäuses. Davon abgesehen kann eine transparente Abdeckung zum Schutz gegen Verschmutzung der Leuchtdioden und des Photoempfängers am Meldergehäuse vorhanden sein. Die Steuereinheit ist dazu eingerichtet, einen Brandalarm auszugeben, falls das vom Photoempfänger ausgegebene Empfangssignal einen Mindeststreulichtpegel überschreitet.

Die Erfindung sowie vorteilhafte Ausführungen der vorliegenden Erfindung werden am Beispiel der nachfolgenden Figuren erläutert. Dabei zeigen:
- FIG 1: eine erfindungsgemässe wechselweise Ansteuerung zweier Leuchtdioden sowie eine messtechnische Auswertung in symbolischer Darstellung,
- FIG 2: eine beispielhafte Schaltungsanordnung zur wechselweisen Ansteuerung sowie zur wechselweisen Auswertung zweier Leuchtdioden jeweils mittels eines Transimpedanzwandlers gemäss der Erfindung, und
- FIG 3 - FIG 6: verschiedene Beispiele für jeweils zwei optisch gekoppelte Leuchtdioden,
- FIG 7: ein Beispiel für eine erfindungsgemässe Rauchdetektionseinheit für einen Streulichtrauchmelder mit einer Zweifarben-Leuchtdiode, einer Einfarben-Leuchtdiode und mit einem Photoempfänger in einer Vorwärts- und Rückwärtsstreulichtanordnung, und
- FIG 8: eine Schnittdarstellung durch einen Rauchmelder geschlossener Bauart mit einem Lichtleiter zur optischen Kopplung zweier Leuchtdioden.

FIG 1 zeigt eine erfindungsgemässe wechselweise Ansteuerung zweier Leuchtdioden L1, L2 sowie eine messtechnische Auswertung in symbolischer Darstellung.

Im linken Teil der Figur ist eine zweite Leuchtdiode L2, z.B. eine "blaue" Leuchtdiode, zum Aussenden von blauem Licht elektrisch angesteuert, symbolisiert durch einen geschlossenen Schalter S2. Dagegen ist zeitgleich eine erste Leuchtdiode L1, z.B. eine "infrarote" Leuchtdiode, in einen Betrieb als Photodiode geschaltet, symbolisiert durch einen geöffneten Schalter S1 und durch ein Messgerät zu Erfassung eines Photostroms oder einer Photospannung der "blauen" Leuchtdiode L2, die mit der ersten Leuchtdiode L1 optisch gekoppelt ist. Dadurch ist ein Teil des von der zweiten Leuchtdiode L2 ausgesandten Lichts durch die erste Leuchtdiode L1 detektierbar. Mit "zeitgleich" ist hier gemeint, innerhalb der Leuchtdauer der jeweils zum Leuchten angesteuerten Leuchtdiode L1, L2, d.h. innerhalb eines Lichtpulses, das von dieser Leuchtdiode L1, L2 ausgesandte Licht messtechnisch erfasst wird.

Im rechten Teil der Figur ist die erste "infrarote" Leuchtdiode L1 zum Aussenden von infrarotem Licht elektrisch angesteuert, symbolisiert durch den geschlossenen Schalter S1. Dagegen ist zeitgleich die zweite "blaue" Leuchtdiode L2 in einen Betrieb als Photodiode geschaltet, symbolisiert durch den geöffneten Schalter S2 und durch ein Messgerät zu Erfassung eines Photostroms oder einer Photospannung der "infraroten" Leuchtdiode L1, die mit der zweiten Leuchtdiode L2 optisch gekoppelt ist. Dadurch ist nun auf umgekehrtem Wege ein Teil des von der ersten Leuchtdiode L1 ausgesandten Lichts durch die zweite Leuchtdiode L2 detektierbar. Generell ist die Detektion von blauem Licht durch die hier infrarote Leuchtdiode L1 effizienter als die Detektion von infrarotem Licht durch die hier blaue Leuchtdiode L2. Dies ist in der FIG 1 durch den kleineren Zeigerausschlag bei der "blauen" Leuchtdiode L2 im Vergleich zum Zeigerausschlag bei der "infraroten" Leuchtdiode L1 symbolisiert.

FIG 2 zeigt eine beispielhafte Schaltungsanordnung zur wechselweisen Ansteuerung sowie zur wechselweisen Auswertung zweier Leuchtdioden L1, L2 jeweils mittels eines Transimpedanzwandlers R_{TI} gemäss der Erfindung. Im unteren Teil der FIG 2 ist eine als Mikrocontroller ausgebildete Steuereinheit MC dargestellt, welche dazu programmiert ist, wechselweise die beiden Schalter S1, S2 zu schliessen und zu öffnen. Die beiden Schalter S1, S2 sind üblicherweise Schalttransistoren. Sie sind im vorliegenden Beispiel im Mikrocontroller MC bereits integriert. Mit den beiden Schaltern S1, S2 werden die beiden Leuchtdioden L1, L2 wechselweise zur Lichtaussendung an eine Versorgungsspannung VCC geschaltet. Ein jeweils parallel zu einer Leuchtdiode L1, L2 geschalteter ohmscher Widerstand R_{TI} ist dazu vorgesehen, einen jeweiligen erzeugten Photostrom I_{L1}, I_{L2} in der Betriebsart "Photodiode" in eine entsprechende Photospannung U_{L2}, U_{L1} umzuwandeln. Der Ohmwert der beiden Widerstände R_{TI} ist dabei um ein Vielfaches grösser als der Innenwiderstand der Leuchtdioden L1, L2 in Vorwärtsrichtung. Die nun vorliegenden Photospannungen U_{L2}, U_{L2} sind im Wesentlichen proportional zum jeweiligen Photostrom durch die Leuchtdioden, der seinerseits im Wesentlichen proportional zum emittierten Lichtstrom ist. Die vorliegenden Photospannungen U_{L2}, U_{L2} können nun besonders einfach durch einen A/D-Umsetzer erfasst und durch den Mikrocontroller MC ausgewertet werden. Die A/D-Umsetzer können auch im Mikrocontroller MC integriert sein.

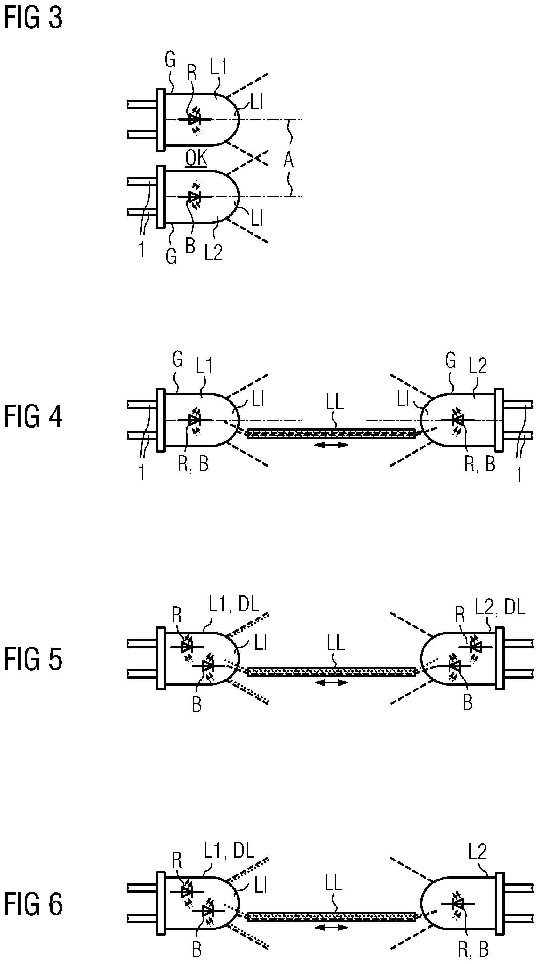

FIG 3 bis FIG 6 zeigen verschiedene Beispiele für jeweils zwei gekoppelte Leuchtdioden L1, L2.

Im Beispiel der FIG 3 sind die beiden Leuchtdioden L1, L2 benachbart angeordnet. Sie sind zudem gleich ausgerichtet, d.h. ihre beiden optischen Achsen A verlaufen parallel zueinander. Die erste Leuchtdiode L1 weist beispielhaft einen rotleuchtenden LED-Chip R und die zweite Leuchtdiode L2 einen blauleuchtenden LED-Chip B auf. Mit G ist das jeweilige LED-Gehäuse in der typischen Form eines 5 mm-Standardgehäuses bezeichnet. Im Gehäuse G ist jeweils eine optische Linse LI zur Lichtbündelung ausgeformt. Mit dem Bezugszeichen 1 sind die Anschlusskontakte der Leuchtdioden L1, L2 zur elektrischen Ansteuerung sowie zur messtechnischen Erfassung eines Photostroms bezeichnet, wenn die jeweilige Leuchtdiode L1, L2 als Photodiode betrieben wird. Diese wird durch eine geeignete Messschaltung, wie z.B. in der FIG 2 gezeigt, erreicht.

Die FIG 4 zeigt zwei miteinander über einen Lichtleiter LL optisch gekoppelte Leuchtdioden L1, L2 in einer schematischen Darstellung. Die FIG 4 zeigt im Wesentlichen, wie ein Teil des von der linken Leuchtdiode L1 ausgesandten Lichts in den Lichtleiter LL einkoppelt, dann durch den Lichtleiter LL verläuft, am anderer Ende des Lichtleiters LL auskoppelt und durch das LED-Gehäuse G der rechten Leuchtdiode L2 hindurchtritt und dort diese Leuchtdiode L2 beleuchtet. Wird die rechte Leuchtdiode L2 als Photodiode betrieben, d.h. dass diese nicht aktiv mit einem Strom zum Lichtaussenden angesteuert wird, so kann ein von der rechten Leuchtdiode L2 erzeugter Photostrom bzw. eine erzeugte elektrische Photospannung erfasst und ausgewertet werden. Auf umgekehrtem Wege kann gleichfalls die linke Leuchtdiode L1 durch einen Teil des ausgesandten Lichts von der rechten Leuchtdiode L2 beleuchtet werden. Die gegenüberliegende Anordnung der beiden Leuchtdioden L1, L2 ist nur symbolisch zu verstehen, ebenso wie die optische Ankopplung des Lichtleiters LL an das jeweilige LED-Gehäuse G. Im Beispiel weisen beide Leuchtdioden L1, L2 jeweils nur einen einzigen LED-Chip R, B mit wahlweise gleicher oder voneinander verschiedener "Lichtfarbe" auf.

Weisen beispielsweise beide Leuchtdioden L1, L2 einen LED-Chip R, B gleicher Farbe, wie z.B. einen Infrarot-LED-Chip, auf, so ist eine besonders effektive gegenseitige Überwachung der beiden Leuchtdioden L1, L2 möglich. Die Verwendung zweier Einfarben-Leuchtdioden L1, L2 mit gleicher Lichtfarbe ist z.B. bei einem kombinierten Vorwärts- und Rückwärts-Streulichtrauchmelder vorteilhaft.

Die FIG 5 unterscheidet sich von der FIG 4 dadurch, dass beide Leuchtdioden L1, L2 als Zweifarben-Leuchtdioden DL ausgebildet sind. Derartige Leuchtdioden DL werden auch als Dual-oder Duo-LEDs bezeichnet. Sie weisen typischerweise zwei LED-Chips R, B mit jeweils voneinander verschiedener Lichtfarbe auf, wie z.B. infrarot und blau. Die beiden jeweiligen LED-Chips R, B können unabhängig voneinander zum Leuchten angesteuert werden, und somit auch gemeinsam. In entsprechender Weise können einer der beiden LED-Chips R, B einer solchen Zweifarben-Leuchtdiode DL oder beide gleichzeitig in den Betrieb als Photodiode geschaltet werden.

Die FIG 6 zeigt eine Kombination aus der FIG 4 und FIG 5 mit einer einzigen Zweifarben-Leuchtdiode DL und einer optisch mit ihr gekoppelten Einfarben-Leuchtdiode L2.

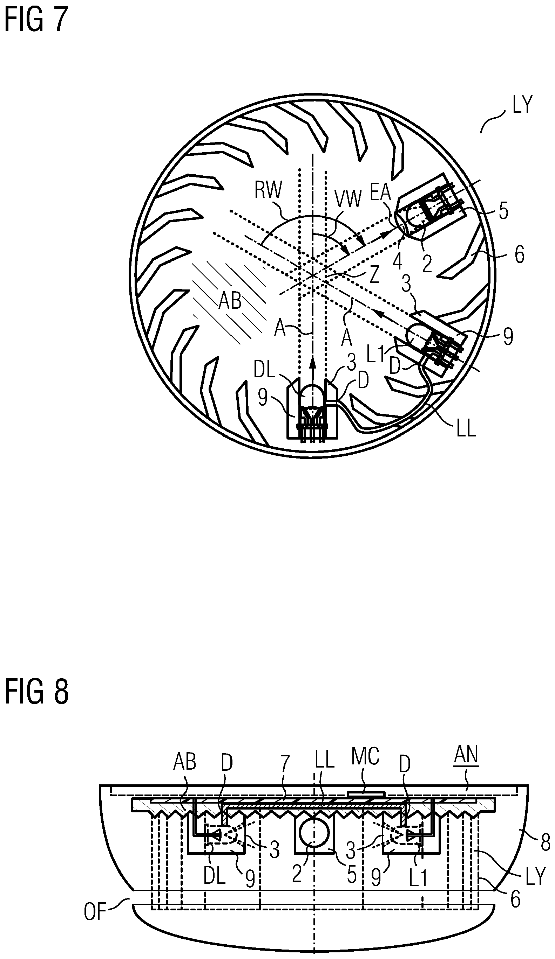

FIG 7 zeigt ein Beispiel für eine erfindungsgemässe Rauchdetektionseinheit für einen Streulichtrauchmelder mit einer Zweifarben-Leuchtdiode DL, einer Einfarben-Leuchtdiode L1 und mit einem Photoempfänger 2 mit vorgeschalteter optischer Linse 4 in einer Vorwärts- und Rückwärtsstreulichtanordnung. Mit LY ist eine optische Messkammer bezeichnet, die für zu detektierenden Rauch durchlässig und gegenüber direktem Umgebungslicht abgeschirmt ist. Erreicht wird dies durch eine geeignete Anordnung von Lamellen 6 der Messkammer LY.

Mit A sind die optischen Achsen der beiden Leuchtdiode DL, L1 und mit EA die optische Empfangsachse des Photoempfängers 2 bezeichnet. Die Zweifarben-Leuchtdiode DL ist dabei mit dem Photoempfänger 2 unter einem Vorwärtsstreulichtwinkel VW von etwa 60° angeordnet. Sie weist vorzugsweise einen infrarot-und einen blauleuchtenden LED-Chip auf. Die Einfarben-Leuchtdiode L1 ist mit dem Photoempfänger 2 unter einem Rückwärtsstreulichtwinkel RW von etwa 120° angeordnet. Die Einfarben-Leuchtdiode L1 weist vorzugsweise einen infrarotleuchtenden LED-Chip auf. Mit Z ist weiterhin ein gemeinsames Streulichtzentrum Z für die Rauchdetektion bezeichnet. Ein Teil des Streulichts von zu detektierenden Partikeln, die von den beiden Leuchtdioden DL, L1 in diesem Streulichtzentrum Z bzw. Messvolumen beleuchtet werden, gelangt schliesslich zum Photoempfänger 2. Um zu vermeiden, dass direktes Licht von der Leuchtdiode DL zum Photoempfänger 2 gelangt, sind zusätzlich noch Blenden 3, 5 vorgesehen.

In der FIG 7 ist zu sehen, dass ein linienförmiger Lichtleiter LL jeweils mit einem Endstück das LED-Gehäuse der beiden Leuchtdioden Dl, L2 seitlich an dem LED-Gehäuse anliegt, sodass ein Teil des von der jeweiligen Leuchtdiode DL, L1 ausgesandten Lichts in den Lichtleiter LL einkoppeln und durch die jeweils andere Leuchtdiode L1, DL detektiert werden kann. Mit D ist eine Durchgangsöffnung in der gezeigten Blende 3 bezeichnet, durch die ein Endstück des Lichtleiters LL hindurch ragt. Die Blende 3 ist vorzugsweise Teil einer LED-Aufnahme 9 zur Aufnahme, Ausrichtung und Fixierung der jeweiligen Leuchtdiode DL, L1 in der optischen Messkammer LY. Der gezeigte Lichtleiter LL ist vorzugsweise "hinter" den beiden Leuchtdioden DL, L1 verlegt, sodass kein Streulicht von dem Lichtleiter LL zum Photoempfänger 2 reflektiert wird.

FIG 8 zeigt eine Schnittdarstellung durch einen Streulichtrauchmelder geschlossener Bauart mit einem Lichtleiter LL zur optischen Kopplung zweier Leuchtdioden DL, L1. Mit dem Bezugszeichen 8 ist ein Meldergehäuse bezeichnet. Über Raucheintrittsöffnungen OF im Meldergehäuse 8 kann zu detektierender Rauch in eine innenliegende optische Messkammer LY gelangen. Im oberen Teil ist mit AN eine Sockelaufnahme des Streulichtrauchmelders bezeichnet, um diesen lösbar an einem Meldersockel anzubringen, der seinerseits an einer Decke befestigt ist. Die FIG 8 zeigt im Schnitt auch einen Schaltungsträger 7 für die elektrische Kontaktierung der beiden Leuchtdioden DL, L1, sowie des Photoempfängers 2 und eines Mikrocontrollers MC als Steuereinheit. Auf dem Schaltungsträger 7 ist eine Abdeckung AB angeordnet, die den Boden der optischen Messkammer LY bildet. Sie ist vorzugsweise aus einem schwarzen lichtabsorbierenden Kunststoff hergestellt. Sie weist weiterhin an ihrer der Messkammer LY zugewandten Seite lichtabsorbierende Strukturen auf, symbolisiert durch eine Zickzack-Struktur. In der gezeigten Darstellung ist neben den beiden Streulichtanordnungen aus Leuchtdioden DL, L1 und Photoempfänger 2 auch ein zwischen dem Schaltungsträger 7 und der Kunststoffabdeckung AB angeordneter Lichtleiter LL zu sehen. Dieser ragt mit seinen beiden Endstücken durch jeweils eine Durchgangsöffnung D in der Abdeckung AB hindurch und grenzt an einer jeweiligen LED-Aufnahme 9. Im montierten Zustand der Leuchtdioden DL, L1 liegen diese dann mit ihrem LED-Gehäuse G direkt am jeweiligen Endstück des Lichtleiters LL zur möglichen Lichtein- und auskopplung an. Durch die Verlegung des Lichtleiters LL zwischen dem Schaltungsträger 7 und der Kunststoffabdeckung AB vereinfacht sich der Montageaufwand erheblich. Zugleich wird vorteilhaft vermieden, dass die glänzende spiegelnde Mantelfläche des Lichtleiters LL wie ein optischer Streukörper für ausgesandtes Licht der Leuchtdioden DL, L1 in der optischen Messkammer LY wirkt.

### Bezugszeichenliste

- 1: optische Rauchdetektionseinheit
- 2: Photosensor, Silizium-PIN-Photodiode, Leuchtdiode
- 3: Blende, Lochblende
- 4: optische Linse
- 5: Photoempfänger-Blende
- 6: Lamellen, Lichtabschirmelement
- 7: Schaltungsträger, Leiterplatte
- 8: Meldergehäuse
- 9: LED-Aufnahme

- A: optische Achse, optische Sendeachse
- AB: Kunststoffabdeckung
- AN: Sockelaufnahme
- B: blauer LED-Chip
- D: Durchgangsöffnung, Aussparung
- DL: Zweifarben-Leuchtdiode, Dual-LED, Duo-LED
- EA: optische Achse, optische Empfangsachse
- G: LED-Gehäuse
- I_{L1}, I_{L2}: Photostrom
- L1, L2: Leuchtdiode, LED
- LI: optische Linse
- LL: Lichtleiter
- LY: optische Messkammer, Labyrinth
- MC: Steuereinheit, Mikrocontroller
- OF: Raucheintrittsöffnung
- OK: optische Kopplung
- PD: Photodiode, Photosensorchip
- R: roter LED-Chip
- R_{TI}: Widerstand, Transimpedanzwandler
- RW: Rückwärtsstreuwinkel
- S1, S2: ansteuerbarer Schalter, Transistor
- U_{L1}, U_{L2}: Photospannung
- VCC: Versorgungsspannung
- VW: Vorwärtsstreuwinkel
- Z: Streulichtzentrum, Messvolumen

## Patentansprüche

1. Optische Rauchdetektionseinheit für einen Gefahrenmelder, insbesondere für einen Rauchmelder, welche zumindest aufweist
- eine erste und zweite Leuchtdiode (L1, L2) jeweils zum Aussenden von ein-, zwei- oder mehrfarbigem Licht,
- einen zumindest spektral auf ausgesandtes Licht empfindlichen Photoempfänger (2) für die Rauchdetektion, und
- eine mit den Leuchtdioden (L1, L2) und mit dem Photoempfänger (2) verbundene Steuereinheit (MC) zur elektrischen Ansteuerung der Leuchtdioden (L1, L2) sowie zur Bewertung eines vom Photoempfänger (2) ausgegebenen Empfangssignals auf Brandkenngrössen hin,
**dadurch gekennzeichnet,**
- **dass** die Leuchtdioden (L1, L2) derart miteinander optisch gekoppelt (OK) sind, dass zumindest eine der Leuchtdioden (L1, L2) die andere Leuchtdiode (L2, L1) mit einem Teil des ausgesandten Lichts beleuchtet,
- **dass** die Steuereinheit (MC) dazu eingerichtet ist, vorzugsweise abwechselnd eine der Leuchtdioden (L1, L2) anzusteuern sowie die andere Leuchtdiode (L2, L1) in eine Betriebsart als Photodiode zu schalten und zugleich einen durch diese fliessenden Photostrom (I_{L1}, I_{L2}) als Mass für den emittierten Lichtstrom der angesteuerten Leuchtdiode (L1, L2) zu erfassen, und
- **dass** die Steuereinheit (MC) dazu eingerichtet ist, eine vom Grad der Abnahme des Photostroms (I_{L1}, I_{L2}) abhängige Alterungsinformation der angesteuerten Leuchtdiode (L1, L2) abzuleiten und auszugeben und/oder davon abhängig die elektrische Ansteuerung der angesteuerten Leuchtdiode (L1, L2) zu verändern, um eine entsprechende Abnahme des emittierten Lichtstroms zu korrigieren.

2. Rauchdetektionseinheit nach Anspruch 1, wobei die Leuchtdioden (L1, L2) jeweils ein LED-Gehäuse (G) mit zumindest einem darin aufgenommenen LED-Chip (R, B) zum Aussenden des ein-, zwei- oder mehrfarbigen Lichts sowie mehrere aus dem LED-Gehäuse (G) herausgeführte Anschlusskontakte (1) zur Kontaktierung mit dem jeweiligen LED-Chip (R, B) aufweisen, und wobei die Steuereinheit (MC) dazu eingerichtet ist, wahlweise einen der LED-Chips (R, B) einer der Leuchtdioden (L1, L2) für die Streulichtrauchdetektion anzusteuern, und dazu eingerichtet, wahlweise einen der LED-Chips (R, B) der anderen Leuchtdiode (L2, L1) in eine Betriebsart als Photodiode zu schalten und zugleich einen durch den jeweiligen LED-Chip (R, B) fliessenden Photostrom (I_{L1}, I_{L2}) zu erfassen, um daraus eine Alterungsinformation des jeweils angesteuerten LED-Chips (R, B) abzuleiten und auszugeben und/oder um daraus die elektrische Ansteuerung für den jeweils angesteuerten LED-Chip (R, B) zu verändern.

3. Rauchdetektionseinheit nach Anspruch 1 oder 2, wobei die beiden Leuchtdioden (L1, L2) über einen Lichtleiter (LL) zur optischen Kopplung (OK) miteinander verbunden sind.

4. Rauchdetektionseinheit nach Anspruch 2 oder 3, wobei zwischen den LED-Gehäusen (G) zweier benachbart angeordneter Leuchtdioden (L1, L2) oder zwischen einem jeweiligen LED-Gehäuse (G) und einem Endstück eines Lichtleiters (LL), welcher zur optischen Kopplung (OK) zweier Leuchtdioden (L1, L2) vorgesehen ist, ein transparenter Klebstoff, ein transparentes Silikon oder ein transparentes Wachs eingebracht ist.

5. Rauchdetektionseinheit nach Anspruch 4, wobei der transparente Klebstoff, das transparante Silikon oder das transparente Wachs einen im Vergleich zum LED-Gehäuse (G) annähernd gleichen optischen Brechungsindex aufweist.

6. Rauchdetektionseinheit nach einem der Ansprüche 3 bis 5, wobei die Leuchtdiode (L1, L2) ein optisch klares LED-Gehäuse (G) aus Kunststoff oder Glas aufweist und wobei das LED-Gehäuse (G) eine optische Aufnahme für den Lichtleiter (LL), insbesondere ein Sackloch aufweist.

7. Rauchdetektionseinheit nach einem der Ansprüche 2 bis 6, wobei ein jeweiliger LED-Chip (R, B) zum Aussenden von infrarotem, rotem, orangenem, gelbem, grünem, blauem, ultraviolettem oder weissem Licht ausgebildet ist.

8. Rauchdetektionseinheit nach einem der vorherigen Ansprüche, wobei zumindest eine der Leuchtdioden (L1, L2) eine Zweifarben-Leuchtdiode (DL) mit zwei LED-Chips (R, B) ist, wobei der erste LED-Chip (R) zum Aussenden von Licht mit einer Wellenlänge im Bereich von 665 nm bis 1000 nm und der zweite LED-Chip (B) zum Aussenden von Licht mit einer Wellenlänge im Bereich von 350 nm bis 500 nm ausgebildet ist.

9. Rauchdetektionseinheit nach einem der vorherigen Ansprüche, wobei der Photosensor (2) für die Rauchdetektion eine zumindest spektral auf ausgesandtes Licht empfindliche, als Photodiode betriebene Leuchtdiode ist.

10. Rauchdetektionseinheit nach einem der vorherigen Ansprüche, wobei die Leuchtdioden (L1, L2, DL) ein Standardkunststoffgehäuse mit einem 3 mm- oder 5 mm-Durchmesser aufweisen oder SMD-Bauelemente für die Oberflächenmontage auf einem Schaltungsträger sind.

11. Streulichtrauchmelder, welcher ein Meldergehäuse (8) und eine darin aufgenommene optische Messkammer (LY) mit zumindest einer Öffnung (OF) für den möglichen Durchtritt von zu detektierendem Rauch aufweist, wobei in der Messkammer (LY) eine gegenüber Umgebungslicht abgeschirmte Rauchdetektionseinheit nach einem der vorherigen Ansprüche 1 bis 10 aufgenommen ist, wobei der Photoempfänger (2) mit beiden Leuchtdioden (L1, L2, DL) in einer Vorwärts- und/oder Rückwärtsstreulichtanordnung für die Detektion von Streulicht angeordnet ist und wobei die Steuereinheit (MC) dazu eingerichtet ist, einen Brandalarm auszugeben, falls das vom Photoempfänger (2) ausgegebene Empfangssignal einen jeweiligen oder kombinierten Mindeststreulichtpegel überschreitet.

12. Extinktionsrauchmelder, welcher ein Meldergehäuse (8) und eine darin aufgenommene optische Messkammer (LY) mit zumindest einer Öffnung (OF) für den möglichen Durchtritt von zu detektierendem Rauch aufweist, wobei in der Messkammer (LY) eine gegenüber Umgebungslicht abgeschirmte Rauchdetektionseinheit nach einem der vorherigen Ansprüche 1 bis 10 aufgenommen ist, wobei der Photoempfänger (2) den beiden Leuchtdioden (L1, L2, DL) zur Detektion von direktem Licht optisch gegenüberliegend angeordnet ist und wobei die Steuereinheit (MC) dazu eingerichtet ist, einen Brandalarm auszugeben, falls das vom Photoempfänger (2) ausgegebene Empfangssignal einen Vergleichswert für eine maximal zulässige Lichtabschwächung unterschreitet.

13. Rauchmelder nach Anspruch 11 oder 12, wobei die optische Messkammer (LY) einen Schaltungsträger (7) zur Kontaktierung der beiden Leuchtdioden (L1, L2, DL), des Photoempfängers (2) und/oder der Steuereinheit (MC) aufweist, wobei der Schaltungsträger (7) eine Kunststoffabdeckung (AB) als Teil der optischen Messkammer (LY) aufweist, wobei ein transparentes Kunststoffteil als Lichtleiter (LL) zur optischen Kopplung (OK) der beiden Leuchtdioden (L1, L2, DL) vorgesehen ist, wobei der Lichtleiter (LL) zwischen dem Schaltungsträger (7) und der Kunststoffabdeckung (AB) angeordnet ist oder mit an der Kunststoffabdeckung (AB) angespritzt ist, und wobei die Kunststoffabdeckung (AB) Durchgangsöffnungen (D) zu den Leuchtdioden (L1, L2, DL) aufweist, sodass diese (L1, L2, DL) über ihr jeweiliges LED-Gehäuse (G), über die jeweilige angrenzende Durchgangsöffnung (D) und über den dort angrenzenden Lichtleiter (LL) optisch miteinander koppelbar sind.

14. Rauchmelder nach Anspruch 13, wobei LED-Aufnahmen (9) für die Leuchtdioden (L1, L2) auf der Kunststoffabdeckung (AB) angeordnet sind oder wobei diese integraler Teil der Kunststoffabdeckung (AB) sind, und wobei die LED-Aufnahmen (9) jeweils eine Durchgangsöffnung (D) für ein Endstück des Lichtleiters (LL) aufweisen.

15. Offener Streulichtrauchmelder, mit einer Rauchdetektionseinheit nach einem der vorherigen Ansprüche 1 bis 10, wobei die Rauchdetektionseinheit in einem Meldergehäuse des offenen Streulichtrauchmelders angeordnet ist, wobei ein für die Detektion von Streulicht vorgesehener Detektionsraum ausserhalb des Meldergehäuses liegt und wobei die Steuereinheit (MC) dazu eingerichtet ist, einen Brandalarm auszugeben, falls das vom Photoempfänger (2) ausgegebene Empfangssignal einen Mindeststreulichtpegel überschreitet.

## Claims

1. Optical smoke detection unit for a hazard alarm, in particular, for a smoke detector which has at least
- a first and second light-emitting diode (L1, L2) each for the emission of monochromatic, dichromatic or polychromatic light,
- an optical receiver (2) which is at least spectrally sensitive to emitted light for smoke detection, and
- a control unit (MC) connected to the light-emitting diodes (L1, L2) and the optical receiver (2) for the electrical control of the light-emitting diodes (L1, L2) and for the evaluation of a receive signal output by the optical receiver (2) for fire parameters,
**characterised in that**
- the light-emitting diodes (L1, L2) are optically coupled (OK) to each other in such a way that at least one of the light-emitting diodes (L1, L2) illuminates the other light-emitting diode (L2, L1) with part of the emitted light,
- the control unit (MC) is configured to control one of the light-emitting diodes (L1, L2), preferably in alternating fashion, and to switch the other light-emitting diode (L2, L1) to operate as a photodiode and simultaneously to record a photoelectric current (I_{L1}, I_{L2}) flowing through this as a measure for the emitted luminous flux of the controlled light-emitting diode (L1, L2), and
- the control unit (MC) is configured to deduce and output aging information regarding the controlled light-emitting diode (L1, L2) dependent on the extent of the reduction in the photoelectric current (I_{L1}, I_{L2}) and/or dependent thereon to alter the electrical control of the controlled light-emitting diode (L1, L2) in order to correct a corresponding reduction in the luminous flux emitted.

2. Smoke detection unit according to claim 1, wherein the light-emitting diodes (L1, L2) each have an LED housing (G) accommodating at least one LED chip (R, B) for the emission of monochromatic, dichromatic or polychromatic light and several terminals (1) leading out of the LED housing (G) for connection to the respective LED chip (R, B), and wherein the control unit (MC) is configured to optionally control one of the LED chips (R, B) of one of the light-emitting diodes (L1, L2) for scattered light smoke detection, and is configured to optionally switch one of the LED chips (R, B) of the other light-emitting diode (L2, L1) to operate as a photodiode and to simultaneously detect a photoelectric current (I_{L1}, I_{L2}) flowing through the respective LED chip (R, B) in order to deduce and output aging information from the respectively controlled LED chips (R, B) and/or to consequently alter the electrical control for the respectively controlled LED chip (R, B).

3. Smoke detection unit according to claim 1 or 2, wherein both the light-emitting diodes (L1, L2) are connected to each other via a light conductor (LL) for optical coupling (OK).

4. Smoke detection unit according to claim 2 or 3, wherein a transparent adhesive, a transparent silicon or a transparent wax is introduced between the LED housings (G) of two adjacent light-emitting diodes (L1, L2) or between a respective LED housing (G) and an endpiece of a light conductor (LL) for the optical coupling (OK) of two light-emitting diodes (L1, L2).

5. Smoke detection unit according to claim 4, wherein the transparent adhesive, the transparent silicon or the transparent wax has approximately the same optical refractive index as the LED housing (G).

6. Smoke detection unit according to one of claims 3 to 5, wherein the light-emitting diode (L1, L2) has an optically clear LED housing (G) made of plastic or glass and wherein the LED housing (G) has an optical mounting for the light conductor (LL), in particular, a blind hole.

7. Smoke detection unit according to one of claims 2 to 6, wherein a respective LED chip (R, B) is designed for the emission of infrared, red, orange, yellow, green, blue, ultraviolet or white light.

8. Smoke detection unit according to one of the preceding claims, wherein at least one of the light-emitting diodes (L1, L2) is a dichromatic-light-emitting diode (DL) with two LED chips (R, B), wherein the first LED chip (R) is designed to emit light with a wavelength in the range of 665 nm to 1000 nm and the second LED chip (B) to emit light with a wavelength in the range of 350 nm to 500 nm.

9. Smoke detection unit according to one of the preceding claims, wherein the photosensor (2) for smoke detection is a light-emitting diode at least spectrally sensitive to emitted light, operated as a photodiode.

10. Smoke detection unit according to one of the preceding claims, wherein the light-emitting diodes (L1, L2, DL) have a standard plastic housing with a 3 mm or 5 mm diameter or are SMD components for surface mounting on a circuit carrier.

11. Scattered light smoke detector which has a detector housing (8) and an optical measurement chamber (LY) accommodated therein with at least one opening (OF) for the possible passage of smoke to be detected, wherein a smoke detection unit shielded from ambient light is accommodated in the measurement chamber (LY) according to one of the preceding claims 1 to 10, wherein the optical receiver (2) is arranged with both light-emitting diodes (L1, L2, DL) in a forward and/or back scattered light arrangement for the detection of scattered light and wherein the control unit (MC) is configured to emit a fire alarm if the receive signal output by the optical receiver (2) exceeds a respective or combined minimum scattered light level.

12. Extinction smoke detector which has a detector housing (8) and an optical measurement chamber (LY) accommodated therein with at least one opening (OF) for the possible passage of smoke to be detected, wherein a smoke detection unit shielded from ambient light is accommodated in the measurement chamber (LY) according to one of the preceding claims 1 to 10, wherein the optical receiver (2) is optically arranged opposite both the light-emitting diodes (L1, L2, DL) for the detection of direct light and wherein the control unit (MC) is configured to emit a fire alarm if the receive signal output by the optical receiver (2) falls below a reference value for maximum permissible light attenuation.

13. Smoke detector according to claim 11 or 12, wherein the optical measurement chamber (LY) has a circuit carrier (7) for contacting the two light-emitting diodes (L1, L2, DL), the optical receiver (2) and/or the control unit (MC), wherein the circuit carrier (7) has a plastic cover (AB) as part of the optical measurement chamber (LY), wherein a transparent plastic part is provided as a light conductor (LL) for the optical coupling (OK) of the two light-emitting diodes (L1, L2, DL),
wherein the light conductor (LL) is arranged between the circuit carrier (7) and the plastic cover (AB) or injection moulded to the plastic cover (AB), and wherein the plastic cover (AB) has through-openings (D) to the light-emitting diodes (L1, L2, DL), enabling these (L1, L2, DL) to be optically coupled to each other via their respective LED housing (G), via the respective adjacent through-opening (D) and via the adjacent light conductor (LL).

14. Smoke detector according to claim 13, wherein LED mountings (9) for the light-emitting diodes (L1, L2) are arranged on the plastic cover (AB) or wherein these are an integral part of the plastic cover (AB), and wherein the LED mountings (9) each have a through-opening (D) for an endpiece of the light conductor (LL).

15. Open scattered light smoke detector, with a smoke detection unit according to one of the preceding claims 1 to 10, wherein the smoke detection unit is arranged in a detector housing of the open scattered light smoke detector, wherein a detection area for the detection of scattered light is located outside the detector housing and wherein the control unit (MC) is configured to emit a fire alarm if the receive signal output by the optical receiver (2) exceeds a minimum scattered light level.

## Revendications

1. Unité de détection de fumée optique pour un avertisseur de danger, en particulier pour un détecteur de fumée, laquelle présente au moins
- une première et une deuxième diode électroluminescente (L1, L2) destinées respectivement à l'émission d'une lumière monochrome, bicolore ou multicolore,
- un photorécepteur (2) sensible au moins dans le spectre à la lumière émise pour la détection de fumée, et
- une unité de commande (MC) reliée aux diodes électroluminescentes (L1, L2) et avec le photorécepteur (2) destinée à la commande électrique des diodes électroluminescentes (L1, L2) ainsi qu'à l'analyse d'un signal de réception émis par le photorécepteur (2) par rapport à des grandeurs caractéristiques d'incendie, **caractérisée en ce que**
- les diodes électroluminescentes (L1, L2) sont couplées optiquement (OK) l'une à l'autre de telle sorte qu'au moins l'une des diodes électroluminescentes (L1, L2) éclaire l'autre diode électroluminescente (L2, L1) avec une partie de la lumière émise,
- l'unité de commande (MC) est conçue de manière à commander de préférence en alternance l'une des diodes électroluminescentes (L1, L2) et à commuter l'autre diode électroluminescente (L2, L1) dans un mode de fonctionnement en tant que photodiode et à détecter en même temps un courant photoélectrique (I_{L1}, I_{L2}) qui les traverse en tant que mesure pour le flux de lumière émis de la diode électroluminescente (L1, L2) commandée, et
- l'unité de commande (MC) est conçue de manière à dévier et à émettre une information relative au vieillissement de la diode électroluminescente (L1, L2) commandée dépendante du degré de baisse du courant photoélectrique (I_{L1}, I_{L2}) et/ou à modifier en fonction de celui-ci la commande électrique de la diode électroluminescente (L1, L2) commandée pour corriger une baisse correspondante du flux de lumière émis.

2. Unité de détection de fumée selon la revendication 1, dans laquelle les diodes électroluminescentes (L1, L2) présentent respectivement un boîtier à LED (G) avec au moins une puce à LED (R, B) logée dans celui-ci destinée à l'émission de la lumière monochrome, bicolore ou multicolore ainsi que plusieurs contacts de raccordement (1) sortis du boîtier à LED (G) destinés à une mise en contact avec la puce à LED (R, B) respective, et dans laquelle l'unité de commande (MC) est conçue de manière à commander au choix l'une des puces à LED (R, B) de l'une des diodes électroluminescentes (L1, L2) pour la détection de fumée par la lumière diffusée, et conçue de manière à commuter au choix l'une des puces à LED (R, B) de l'autre diode électroluminescente (L2, L1) dans un mode de fonctionnement en tant que photodiode et à détecter en même temps un courant photoélectrique (I_{L1}, I_{L2}) circulant à travers la puce à LED (R, B) respective pour dévier et émettre à partir de celui-ci une information relative au vieillissement de la puce à LED (R, B) commandée respectivement et/ou pour modifier à partir de celui-ci la commande électrique pour la puce à LED (R, B) commandée respectivement.

3. Unité de détection de fumée selon la revendication 1 ou 2, dans laquelle les deux diodes électroluminescentes (L1, L2) sont reliées l'une à l'autre par l'intermédiaire d'un guide de lumière (LL) en vue d'un couplage optique (OK).

4. Unité de détection de fumée selon la revendication 2 ou 3, dans laquelle entre les boîtiers à LED (G) de deux diodes électroluminescentes (L1, L2) disposées de manière adjacente ou entre un boîtier à LED (G) respectif et une extrémité d'un guide de lumière (LL), qui est prévu pour un couplage optique (OK) de deux diodes électroluminescentes (L1, L2), un adhésif transparent, une silicone transparente ou une cire transparente est appliqué.

5. Unité de détection de fumée selon la revendication 4, dans laquelle l'adhésif transparent, la silicone transparente ou la cire transparente présente un indice de réfraction optique à peu près similaire en comparaison avec le boîtier à LED (G).

6. Unité de détection de fumée selon l'une des revendications 3 à 5, dans laquelle la diode électroluminescente (L1, L2) présente un boîtier à LED (G) optiquement clair en matière plastique ou en verre et dans laquelle le boîtier à LED (G) présente un logement optique pour le guide de lumière (LL), en particulier un trou borgne.

7. Unité de détection de fumée selon l'une des revendications 2 à 6, dans laquelle une puce à LED (R, B) respective destinée à l'émission de lumière infrarouge, rouge, orange, jaune, verte, bleue, ultraviolette ou blanche est configurée.

8. Unité de détection de fumée selon l'une des revendications précédentes, dans laquelle l'une des diodes électroluminescentes (L1, L2) est une diode électroluminescente bicolore (DL) avec deux puces à LED (R, B), dans laquelle la première puce à LED (R) est configurée pour une émission de lumière avec une longueur d'ondes dans la plage de 665 nm à 1000 nm et la deuxième puce à LED (B) est configurée pour une émission de lumière avec une longueur d'onde dans la plage de 350 nm à 500 nm.

9. Unité de détection de fumée selon l'une des revendications précédentes, dans laquelle le photocapteur (2) pour la détection de fumée est une diode électroluminescente, fonctionnant comme une photodiode, sensible au moins dans le spectre à la lumière émise.

10. Unité de détection de fumée selon l'une des revendications précédentes, dans laquelle les diodes électroluminescentes (L1, L2, DL) présentent un boîtier en matière plastique standard avec un diamètre de 3 mm ou de 5 mm ou sont des composants CMS pour le montage en surface sur un support de circuit.

11. Détecteur de fumée par lumière diffusée, qui présente un boîtier de détecteur (8) et un compartiment de mesure optique (LY) logé dans celui-ci avec au moins une ouverture (OF) pour la traversée possible de la fumée à détecter, dans lequel dans le compartiment de mesure (LY) est logée une unité de détection de fumée selon l'une des revendications précédentes 1 à 10 protégée contre la lumière environnante, dans lequel le photorécepteur (2) est disposé avec les deux diodes électroluminescentes (L1, L2, DL) dans un agencement de lumière diffusée vers l'avant et/ou vers l'arrière pour la détection de la lumière diffusée et dans lequel l'unité de commande (MC) est conçue de manière à émettre une alarme incendie dans le cas où le signal de réception émis par le photorécepteur (2) dépasse un niveau de lumière diffusée minimal respectif ou combiné.

12. Détecteur de fumée par extinction, qui présente un boîtier de détecteur (8) et un compartiment de mesure optique (LY) logé dans celui-ci avec au moins une ouverture (OF) pour la traversée possible de la fumée à détecter, dans lequel dans le compartiment de mesure (LY) une unité de détection de fumée selon l'une des revendications précédentes 1 à 10 protégée contre la lumière environnante est logée, dans lequel le photorécepteur (2) est disposé optiquement à l'opposé des deux diodes électroluminescentes (L1, L2, DL) pour la détection de la lumière directe et dans lequel l'unité de commande (MC) est conçue de manière à émettre une alarme incendie dans le cas où le signal de réception émis par le photorécepteur (2) descend en dessous d'une valeur comparative pour un affaiblissement de lumière admissible maximal.

13. Détecteur de fumée selon la revendication 11 ou 12, dans lequel le compartiment de mesure optique (LY) présente un support de circuit (7) destiné à la mise en contact des deux diodes électroluminescentes (L1, L2, DL), du photorécepteur (2) et/ou de l'unité de commande (MC), dans lequel le support de circuit (7) présente un cache en matière plastique (AB) en tant que partie du compartiment de mesure optique (LY), dans lequel une partie en matière plastique transparente est prévue en tant que guide de lumière (LL) destiné au couplage optique (OK) des deux diodes électroluminescentes (L1, L2, LL), dans lequel le guide de lumière (LL) est disposé entre le support de circuit (7) et le cache en matière plastique (AB) ou est injecté au niveau du cache en matière plastique (AB), et dans lequel le cache en matière plastique (AB) présente des ouvertures de passage (D) vers les diodes électroluminescentes (L1, L2, DL), de sorte que ces diodes électroluminescentes (L1, L2, DL) peuvent être couplées optiquement les unes aux autres par l'intermédiaire de leur boîtier à LED (G) respectif, par l'intermédiaire de l'ouverture de passage (D) adjacente respective et par l'intermédiaire du guide de lumière (LL) qui y est adjacent.

14. Détecteur de fumée selon la revendication 13, dans lequel des logements à LED (9) pour les diodes électroluminescentes (L1, L2) sont disposés sur le cache en matière plastique (AB) et dans lequel ils font partie intégrante du cache en matière plastique (AB), et dans lequel les logements à LED (9) présentent respectivement une ouverture de passage (D) pour une extrémité du guide de lumière (LL).

15. Détecteur de fumée par lumière diffusée ouvert, avec une unité de détection de fumée selon l'une des revendications précédentes 1 à 10, dans lequel l'unité de détection de fumée est disposée dans un boîtier de détecteur du détecteur de fumée par lumière diffusée ouvert, dans lequel un espace de détection prévu pour la détection de la lumière diffusée se trouve à l'extérieur du boîtier de détecteur et dans lequel l'unité de commande (MC) est conçue de manière à émettre une alarme incendie dans le cas où le signal de réception émis par le photorécepteur (2) dépasse un niveau de lumière diffusée minimal.
